# EUROPÄISCHE PATENTSCHRIFT

(11) **EP 4 237 267 B1**
(45) Veröffentlichungstag und Bekanntmachung des Hinweises auf die Patenterteilung: **01.01.2025**
(21) Anmeldenummer: 21789645.5
(22) Anmeldetag: 05.10.2021
(51) Int. Cl.: B60K 1/04

(54) **FAHRZEUG MIT BATTERIEHALTERUNG**
VEHICLE HAVING A BATTERY HOLDER
VÉHICULE POURVU D'UN SUPPORT DE BATTERIE

(30) Priorität: 30.10.2020 DE 102020128582
(43) Veröffentlichungstag der Anmeldung: 06.09.2023
(73) Patentinhaber: MAN Truck & Bus SE, 80995 München (DE)
(72) Erfinder: FRIES, Stefan, 87616 Marktoberdorf (DE); LERCHE, Jacek, 80799 München (DE); SCHUSTER, Stefan, 86842 Türkheim (DE)
(74) Vertreter: v. Bezold & Partner Patentanwälte - PartG mbB
(86) Internationale Anmeldenummer: PCT/EP2021/077331
(87) Internationale Veröffentlichungsnummer: WO 2022/089881

(56) Entgegenhaltungen:
- EP-A1- 2 554 420
- DE-A1- 102016 113 759
- DE-A1- 102018 121 227

## Beschreibung

Die Erfindung betrifft ein Fahrzeug mit einer Batteriehalterung zur Aufnahme wenigstens einer Antriebsbatterie. Insbesondere betrifft die Erfindung ein Fahrzeug mit einem Trägerrahmen aus zwei Längs- und mehreren Querträgern, bei dem die Batteriehalterung zwischen den beiden Längsträgern des Trägerrahmens angeordnet ist.

Zur Einhaltung der gesetzlichen Zielvorgaben für die Reduktion von Fahrzeugemissionen erlangt die Elektrifizierung des Fahrzeugantriebs auch im Nutzfahrzeugbereich eine immer größere Bedeutung. Die elektrisch angetriebenen Fahrzeugkonzepte stellen dabei zumeist Weiterentwicklungen der bestehenden verbrennungsmotorisch betriebenen Fahrzeuge dar. Aus der Historie abgeleitet sind diese vorwiegend mit Leiterrahmen ausgerüstet, an welchen zumeist sämtliche Aggregate wie Motor, Getriebe, Achse, Fahrerhaus und Nebenaggregate etc. befestigt werden.

Eine besondere Rolle kommt in diesem Zusammenhang der Anbringung bzw. Aufhängung von Hochvoltbatterien zu, welche bei vorgenannten Fahrzeugen zumeist als Energiespeicher verwendeten werden. Die Hochvoltbatterien sind in der Regel schwere, teure und sensible Bauteile, die nur geringfügig Torsion oder Verformung dulden, wohingegen der Fahrzeugrahmen in der Regel torsionsweich ausgeführt ist, um bessere Fahreigenschaften zu erreichen und um eine Dauerhaltbarkeit bei schwerer Beladung sicherstellen zu können.

Aufgrund dieser unterschiedlichen Anforderungen besteht bei der Halterung von Hochvoltbatterien an einem Trägerrahmen eines Fahrzeugs ein Bedarf an einer Lösung, mittels derer Torsionsmomente des Rahmens möglichst zuverlässig vom Batteriegehäuse entkoppelt werden können.

Die DE 10 2016 113 759 A1 offenbart in diesem Zusammenhang eine Befestigungsanordnung einer Batterieeinrichtung an einem Rahmen eines Nutzfahrzeugs, bei welcher die Batterieeinrichtung über eine Halteeinrichtung am jeweiligen Längsträger des Rahmens gehalten ist, wobei die Batterieeinrichtung zwischen den beiden Längsträgern des Rahmens angeordnet ist. In weiterer Ausgestaltung weist die Halteeinrichtung elastische Aufnahmen auf, über welche die Batterieeinrichtung am Rahmen des Nutzfahrzeugs gehalten ist. Durch diese elastische Lagerung kann der Einfluss von Biege- und Torsionskräften auf die Batterieeinrichtung deutlich reduziert werden. Allerdings ermöglicht die elastische Lagerung keine gleichbleibenden und von Umwelteinflüssen unabhängigen Lagereigenschaften und weist mitunter nur eine geringe Haltbarkeit auf.

Entsprechend ist es Aufgabe der Erfindung, eine Lösung für dieses Erfordernis bereitzustellen. Insbesondere ist es dabei Aufgabe der Erfindung, eine im Vergleich zu herkömmlichen Techniken verbesserte und/oder alternative Lösung zur sicheren Aufhängung einer Batterie an einem Trägerrahmen bereitzustellen, die vorzugsweise zudem einen möglichst geringen Montageaufwand erfordert.

Diese Aufgaben können mit den Merkmalen des unabhängigen Anspruchs gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Nach einem ersten unabhängigen Lösungsgedanken wird hierzu ein Fahrzeug bereitgestellt. Vorzugsweise handelt es sich bei dem Fahrzeug um ein Nutzfahrzeug, d. h. ein Fahrzeug, das durch seine Bauart und Einrichtung zur Beförderung von Personen, zum Transport von Gütern oder zum Ziehen von Anhängerfahrzeugen ausgelegt ist. Beispielsweise kann es sich bei dem Fahrzeug um einen Lastkraftwagen, einen Omnibus und oder einen Sattelzug handeln.

Das Fahrzeug weist dabei einen Trägerrahmen auf, wobei der Trägerrahmen zwei, voneinander beabstandete und über mehrere Querträger miteinander verbundene, Längsträger (z. B. C-Profilträger) umfasst. Der Trägerrahmen kann beispielsweise zur Halterung einer Antriebsachse und/oder eines Fahrerhauses dienen und ein Trägerrahmen des Fahrgestells sein. Ferner weist das Fahrzeug eine, vorzugsweise zumindest eine, Batteriehalterung zur Aufnahme wenigstens einer Antriebsbatterie auf. Die Antriebsbatterie kann in diesem Zusammenhang auch als Traktions- oder Hochvoltbatterie bezeichnet werden. Die vorgenannte Batteriehalterung soll hierbei zwischen den Längsträgern des Trägerrahmens angeordnet sein. D. h., mit anderen Worten kann die Batteriehalterung einen geringeren Abstand zur Längsmittelebene des Fahrzeugs als die jeweiligen Längsträger besitzen.

Um nun auf vorteilhafte Weise Torsionsmomente des Trägerrahmens möglichst zuverlässig von einer in der Batteriehalterung aufgenommenen Antriebsbatterie zu entkoppeln, ist die Batteriehalterung mittels einer 3-Punkt-Lagerung mit dem Trägerrahmen verbunden. Dabei weist die 3-Punkt-Lagerung drei Lagerstellen mit je einem, vorzugsweise kinematischen, Gelenk auf. Anders ausgedrückt, soll die Batteriehalterung ausschließlich über drei Lagerstellen am Trägerrahmen befestigt sein, ohne dass bevorzugt weitere tragende Verbindungen zwischen der Batteriehalterung und dem Trägerrahmen bestehen. Als (kinematisches) Gelenk kann in diesem Zusammenhang eine bewegliche Verbindung zwischen zwei Segmenten (hier zwischen der Batteriehalterung und dem Trägerrahmen) verstanden werden, welche die relative Bewegung der beiden Segmente einschränkt bzw. eine Bewegung der Segmente nur in einer vorgegebenen Art und Weise erlaubt.

Die Vorteile entsprechender Gelenkverbindungen zur Bewegungsentkoppelung - insbesondere gegenüber einer z. B. elastomeren Verbindung - sind dabei die im Wesentlichen gleichbleibenden, d. h. von Umwelteinflüssen unabhängigen, Lagereigenschaften sowie ihre Haltbarkeit. Ferner kann durch die stabile mechanische Verbindung eine sichere Lagerung der schweren Antriebsbatterien sichergestellt werden.

Gemäß einem ersten Aspekt der Erfindung kann jedes der besagten Gelenke eine Schwenkachse umfassen, wobei zwei der Schwenkachsen in Fahrzeugquerrichtung orientiert sein sollen und eine der Schwenkachsen in Fahrzeuglängsrichtung orientiert sein soll. Mit anderen Worten kann die Batteriehalterung an zwei - im Folgenden zur besseren Unterscheidbarkeit auch als erste und zweite Lagerstelle bezeichneten - Lagerstellen jeweils um eine in Fahrzeugquerrichtung verlaufende Schwenkachse schwenkbar am Trägerrahmen gelagert sein und an einer - im Folgenden als dritte Lagerstelle bezeichneten - Lagerstelle um eine in Fahrzeuglängsrichtung verlaufende Schwenkachse schwenkbar am Trägerrahmen gelagert sein. D. h., die Schwenkachsen der ersten und zweiten Lagerstelle können senkrecht zur Schwenkachse der dritten Lagerstelle verlaufen. Durch die unterschiedliche Lagerung kann auf vorteilhafte Weise eine Aufhängung der Batteriehalterung bereitgestellt werden, die eine Bewegung der Batteriehalterung relativ zum Trägerrahmen ermöglicht, wodurch die Batteriehalterung einerseits mögliche Verwindungen des Trägerrahmens nicht behindert und andererseits selbst möglichst geringen Torsionsbelastungen ausgesetzt ist.

Nach einem weiteren Aspekt der Erfindung können die zwei Schwenkachsen in Fahrzeugquerrichtung, d. h. die Schwenkachsen der ersten und zweiten Lagerstelle, fluchtend zueinander angeordnet sein. D. h., die beiden Schwenkachsen können derart angeordnet sein, dass diese - ohne Achsversatz - auf einer gemeinsamen gedachten Gerade liegen.

Um im Rahmen der vorgenannten Lagerung auf vorteilhafte Weise eine möglichst hohe Bewegungsfreiheit der Batteriehalterung zu ermöglichen und zudem die Belastungen der Lager zu reduzieren, kann gemäß einem ersten Aspekt der Erfindung jedes der besagten Gelenke, d. h. das entsprechende Gelenk der ersten, zweiten und dritten Lagerstelle, jeweils einen rotatorischen Freiheitsgrad sowie einen translatorischen Freiheitsgrad umfassen. Der rotatorische Freiheitsgrad kann hierbei zur Realisierung einer Schwenkbarkeit der Batteriehalterung gegenüber dem Trägerrahmen um die jeweilige Schwenkachse dienen, während der translatorische Freiheitsgrad zur Realisierung einer Verschiebbarkeit der Batteriehalterung gegenüber dem Trägerrahmen entlang der jeweiligen Schwenkachse dienen kann.

Ferner kann nach einem weiteren Aspekt der Erfindung jedes der besagten Gelenke ein Gleitlager umfassen. Lediglich beispielhaft kann das Gleitlager dabei als eine, einen am Trägerrahmen befestigten Zapfen umhüllende, Gleitlagerbuchse mit einem Stahlrücken und wenigstens einer Gleitschicht, vorzugsweise einer Kunststoff-Gleitschicht, ausgebildet sein. Zudem oder alternativ kann jedes der besagten Gelenke auch als zylindrisches Gelenk ausgebildet sein. Als "zylindrisches Gelenk" soll hierbei gemäß dem allgemeinen Verständnis ein Gelenk verstanden werden, welches eine Translation entlang einer Achse unabhängig von einer Rotation um ebendiese Achse erlaubt. Zudem oder alternativ kann jedes der besagten Gelenke auch als Drehgelenk mit axialem Lagerspiel ausgebildet sein. Der Ausdruck "Lagerspiel" soll hierbei verdeutlichen, dass die Bewegungsfreiheit in axialer Richtung kleiner als die entsprechende Bewegungsfreiheit entlang der Drehrichtung ist. Insgesamt kann durch alle vorgenannten Lagerungsarten auf vorteilhafte Weise eine möglichst hohe Bewegungsfreiheit der Batteriehalterung bei gleichzeitiger Reduzierung der Lagerbelastungen im Zusammenhang mit der beanspruchten Batterieaufhängung erreicht werden.

Gemäß einem weiteren Aspekt der Erfindung kann die 3-Punkt-Lagerung ausgebildet sein, Bewegungen, vorzugsweise Nickbewegungen und/oder Wankbewegungen, der Batteriehalterung relativ zum Trägerrahmen zu ermöglichen. Mit anderen Worten kann die 3-Punkt-Lagerung ausgebildet sein, Relativbewegungen zwischen der Batteriehalterung und dem Trägerrahmen zuzulassen. Zudem oder alternativ kann die 3-Punkt-Lagerung auch ausgebildet sein, die Batteriehalterung bewegungstechnisch zumindest teilweise vom Trägerrahmen zu entkoppeln. Auf vorteilhafte Weise kann dadurch erreicht werden, dass die Batteriehalterung mögliche Verwindungen des Trägerrahmens nicht behindert und dabei selbst möglichst geringen Torsionsbelastungen ausgesetzt ist.

Nach einem weiteren Aspekt der Erfindung kann die Batteriehalterung mit zumindest einem Querträger verbunden sein, der im Folgenden zur besseren Unterscheidbarkeit auch als "erster Querträger" bezeichnet werden soll. Vorzugsweise ist der zumindest eine Querträger bzw. der erste Querträger dabei als Vierkanthohlprofilträger ausgebildet. Beispielsweise kann die Batteriehalterung z. B. mittels der vorgenannten dritten Lagerstelle mit dem, vorzugsweise in Fahrzeuglängsrichtung "hinteren", ersten Querträger verbunden sein.

Weiterhin kann - gemäß einem weiteren Aspekt der Erfindung - die Batteriehalterung zusätzlich mit zumindest einem weiteren, d. h. vom ersten Querträger unterschiedlichen, Querträger verbunden sein. Dieser soll im Folgenden zur besseren Unterscheidbarkeit als "zweiter Querträger" bezeichnet werden und kann vorzugsweise ebenfalls als Vierkanthohlprofilträger ausgebildet sein. Anders ausgedrückt kann die Batteriehalterung in dieser Ausführung zwischen zwei Querträgern des Trägerrahmens angeordnet sein, d. h. zwischen dem vorgenannten ersten und zweiten Querträger. Beispielsweise kann die Batteriehalterung z. B. mittels der vorgenannten ersten und zweiten Lagerstelle mit dem, vorzugsweise in Fahrzeuglängsrichtung "vorderen", zweiten Querträger verbunden sein. Zudem oder alternativ dazu kann die Batteriehalterung - neben der Verbindung mit dem ersten Querträger - auch mit zumindest einem Längsträger verbunden sein. Beispielsweise kann die Batteriehalterung z. B. mittels der vorgenannten ersten Lagerstelle mit einem der beiden Längsträger und mittels der zweiten Lagerstelle mit dem anderen der beiden Längsträger verbunden sein. Auf vorteilhafte Weise kann so, je nach vorhandenem Bauraum, eine geeignete 3-Punkt-Lagerung für die Batteriehalterung realisiert werden.

Gemäß einem weiteren Aspekt der Erfindung kann die Batteriehalterung als zumindest vierseitig geschlossener Kasten ausgebildet sein. Vorzugsweise ist die Batteriehalterung dabei sowohl in Fahrzeugquerrichtung als auch Fahrzeuglängsrichtung verschlossen. Falls zweckdienlich, kann die Batteriehalterung ferner auch einen Deckel umfassen, d. h. als fünfseitig geschlossener Kasten ausgebildet sein. Zudem oder alternativ kann die Batteriehalterung auch Lochblechwandungselemente zur Befestigung, vorzugsweise zur Verschraubung, der wenigstens einen Antriebsbatterie umfassen. Als "Lochblechwandungselement" kann hierbei ein, vorzugsweise plattenförmiges, Wandungselement verstanden werden, in welchem durch Stanzen, Perforieren oder Bohren mehrere Öffnungen (Löcher), vorzugsweise in regelmäßiger Anordnung, eingebracht sind. Über die vorgenannten Öffnungen können auf vorteilhafte Weise definierte Befestigungsstellen für ein oder mehrere Antriebsbatterien geschaffen werden. Zudem oder alternativ kann die Batteriehalterung fahrzeugbodenseitig keine Begrenzung umfassen. D. h., mit anderen Worten kann die Batteriehalterung fahrzeugbodenseitig offen sein. Dies ermöglicht auf vorteilhafte Weise eine gute Zugänglichkeit der Antriebsbatterien im Zuge von Wartungs- und/oder Montagearbeiten.

Nach einem weiteren Aspekt der Erfindung können in der Batteriehalterung zumindest zwei Antriebsbatterien aufgenommen sein und/oder neben der wenigstens einen Antriebsbatterie zumindest ein Zusatzaggregat, vorzugsweise eine elektrische Maschine, aufgenommen sein. Beispielsweise kann ein Elektromotor für den elektrischen Antrieb des Fahrzeugs mit in der Batteriehalterung angeordnet sein. Auf vorteilhafte Weise kann dadurch eine Doppelnutzung der entsprechenden Halterungen geschaffen werden. Zudem oder alternativ kann die Batteriehalterung auch achssymmetrisch zur Längsmittelachse des Fahrzeugs angeordnet sein. Mit anderen Worten kann die Längsmittelachse eine Symmetrieachse für die Lagerung der Batterie darstellen. Um ferner auf vorteilhafte Weise flexibler in der Lagerung der Batterie zu sein, kann die Batteriehalterung zudem oder alternativ auch einen Blechbügel umfassen.

Dieser kann dabei eine erste Befestigungsstelle aufweisen, mittels derer der Blechbügel an der Batteriehalterung befestigt ist, und eine zweite Befestigungsstelle, mittels derer der Blechbügel an eine der drei Lagerstellen angelenkt ist. Vorzugsweise ist dabei die erste Befestigungsstelle in Fahrzeughöhenrichtung versetzt zur zweiten Befestigungsstelle angeordnet.

Gemäß einem weiteren Aspekt der Erfindung kann das Fahrzeug eine Mehrzahl - d. h. zumindest zwei, vorzugsweise drei - besagter Batteriehalterungen umfassen. Vorzugsweise sind die Batteriehalterungen dabei über die Fahrzeuglängsrichtung verteilt im Fahrzeug angeordnet.

Nach einem weiteren Aspekt der Erfindung kann eine Batteriehalterung, d. h. eine der Mehrzahl besagter Batteriehalterungen, über einer Vorderachse des Fahrzeugs angeordnet sein. Zudem oder alternativ können auch zumindest zwei Batteriehalterungen zwischen der Vorderachse und einer Hinterachse des Fahrzeugs angeordnet sein. Vorzugsweise ist dabei die oberhalb der Vorderachse angeordnete Batteriehalterung - bezogen auf die Fahrzeughöhenrichtung - höher aufgehängt als die zwischen der Vorder- und Hinterachse angeordneten Batteriehalterungen. D. h., mit anderen Worten können zumindest Teile der Batteriehalterungen der Mehrzahl besagter Batteriehalterungen in Fahrzeughöhenrichtung auf unterschiedlichen Höhen angeordnet sein. Auf vorteilhafte Weise wird dadurch eine möglichst optimale Ausnutzung des vorhandenen Bauraums ermöglicht.

Gemäß einem weiteren Aspekt der Erfindung können die zwei Längsträger eine Mehrzahl, entlang der Fahrzeuglängsrichtung verteilter, Befestigungsstellen zur wahlweisen Bereitstellung unterschiedlicher Querträgerabstände für die Anbringung unterschiedlich großer Batteriehalterungen umfassen. Mit anderen Worten kann durch die mehreren Befestigungsstellen ja nach Größe der Batteriehalterungen ein passender Querträgerabstand eingestellt werden, um dadurch auf vorteilhafte Weise einen für die entsprechende Batteriegröße möglichst optimalen Einbauraum zu schaffen. Ein weiterer Vorteil ist, dass dadurch das Fahrzeug auch nachträglich leicht an sich verändernde Betriebsbedingungen angepasst werden kann, beispielsweise, indem es nachträglich mit einer größeren oder kleineren Batterie ausgestattet werden kann.

Nach einem weiteren Aspekt der Erfindung kann das Fahrzeug ein, vorzugsweise elektrisch angetriebenes, Nutzfahrzeug sein. Lediglich beispielhaft kann das Fahrzeug eine Sattelzugmaschine sein, wobei es sich alternativ auch um ein Fahrzeug zur Personenbeförderung, wie einen Omnibus, handeln kann.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: verschiedene schematische Ansichtsdarstellungen eines Fahrzeugs gemäß einer ersten Ausführungsform der Erfindung;
- Figur 2: eine schematische Darstellung eines Trägerrahmens eines Fahrzeugs mit mehreren Batteriehalterungen gemäß einer Ausführungsform der Erfindung;
- Figur 3: eine schematische Detail-Darstellung der in Figur 2 gezeigten Anordnung ohne Längsträger;
- Figur 4: eine schematische Detail-Darstellung der jeweiligen Lagerungen der in Figur 3 gezeigten Anordnung ohne einen Teil der Batteriehalterungen; und
- Figur 5: eine schematische Detail-Darstellung der Lagerungen an einem der in Figur 3 gezeigten Querträger.

Gleiche oder funktional äquivalente Elemente sind dabei in allen Figuren mit denselben Bezugszeichen bezeichnet und zum Teil nicht gesondert beschrieben.

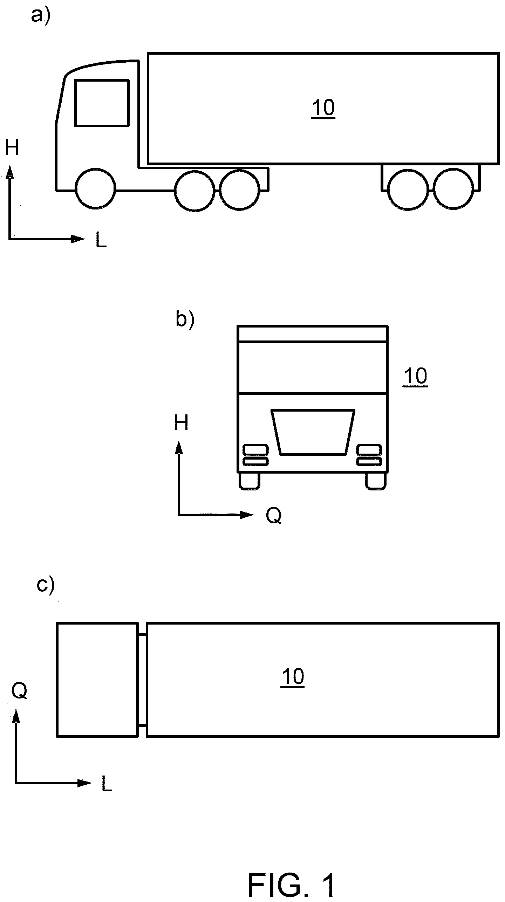

Figur 1 zeigt verschiedene schematische Ansichtsdarstellungen (Seitenansicht, Frontansicht, und Aufsicht) eines Fahrzeugs 10 gemäß einer ersten Ausführungsform der Erfindung. Vorliegend handelt es sich dabei - lediglich beispielhaft - um einen Sattelzug, aufweisend eine Sattelzugmaschine und einen Sattelauflieger. Die verschiedenen, mit a), b) und c) bezeichneten, Ansichten des Fahrzeugs 10 sowie die darin mittels der Pfeile markierten Richtungen dienen hierbei lediglich dazu, die insgesamt in diesem Dokument verwendeten Richtungsangaben, darunter eine Fahrzeuglängsrichtung L, eine Fahrzeughöhenrichtung H und eine Fahrzeugquerrichtung Q, zu verdeutlichen. Gemäß der üblichen Verwendung sind diese drei Richtungen dabei entlang der Hauptachsen bzw. Symmetrieachsen des Fahrzeugs 10 orientiert und stehen wechselseitig senkrecht aufeinander. Im Detail zeigt die Darstellung a) eine Seitenansicht des Fahrzeugs 10 in einer Ebene senkrecht zur Fahrzeugquerrichtung Q, Darstellung b) eine Frontansicht des Fahrzeugs 10 in einer Ebene senkrecht zur Fahrzeuglängsrichtung L und Darstellung c) eine Aufsicht des Fahrzeugs 10 in einer Ebene senkrecht zur Fahrzeughöhenrichtung H. Basierend auf diesen Richtungsangaben werden im Folgenden nun weitere Details zur Ausgestaltung der Batterielagerung eingehender behandelt.

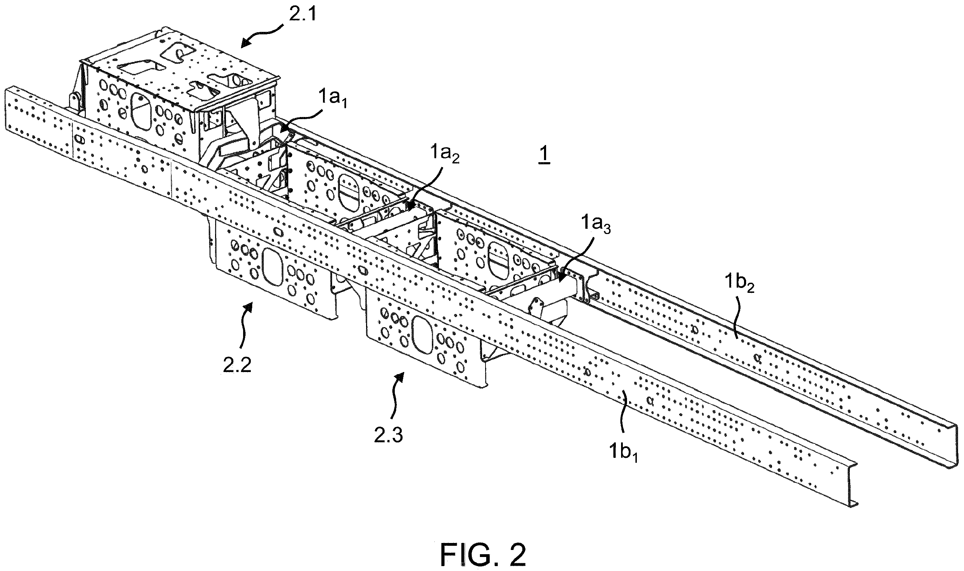

Figur 2 zeigt eine schematische Darstellung eines Trägerrahmens 1 eines Fahrzeugs 10 mit mehreren Batteriehalterungen 2.1, 2.2 und 2.3 gemäß einer Ausführungsform der Erfindung. Das hierbei nicht näher dargestellte Fahrzeug 10 weist dabei einen Trägerrahmen 1 mit zwei voneinander beabstandeten und über mehrere Querträger 1a₁, 1a₂, 1a₃ miteinander verbundenen Längsträgern 1b₁ und 1b₂, auf. Vorzugsweise handelt es sich bei den beiden Längsträgern 1b₁, 1b₂ hierbei um C-Profilträger. Ferner weist das Fahrzeug 10 zumindest eine Batteriehalterung 2.1, 2.2, 2.3 zur Aufnahme wenigstens einer (nicht dargestellten) Antriebsbatterie auf, wobei vorliegend exemplarisch drei Batteriehalterungen 2.1, 2.2 und 2.3 vorhanden sind.

Die drei Batteriehalterungen 2.1, 2.2 und 2.3 sind hierbei zwischen den beiden Längsträgern 1b₁, 1b₂ des Trägerrahmens 1 angeordnet und jeweils mittels einer entsprechenden 3-Punkt-Lagerung 3.1, 3.2, 3.3 mit dem Trägerrahmen 1 verbunden. D. h., mit anderen Worten sollen die Batteriehalterungen 2.1, 2.2, 2.3 jeweils ausschließlich über drei Anbindungsstellen am Trägerrahmen 1 befestigt sein, ohne dass sonstige tragende Verbindungen zwischen den Batteriehalterungen 2.1, 2.2, 2.3 und dem Trägerrahmen 1 bestehen. Hierbei weist jede der 3-Punkt-Lagerungen 3.1, 3.2, 3.3 jeweils drei - im Folgenden noch eingehender beschriebene - Lagerstellen 3a, 3b, 3c mit jeweils einem, vorzugsweise kinematischen, Gelenk auf. Auf vorteilhafte Weise wird dadurch eine sichere Anbindung der Antriebsbatterien ermöglicht, während gleichzeitig Torsionsmomente des Trägerrahmens 1 möglichst zuverlässig von den Antriebsbatterien entkoppelt werden können.

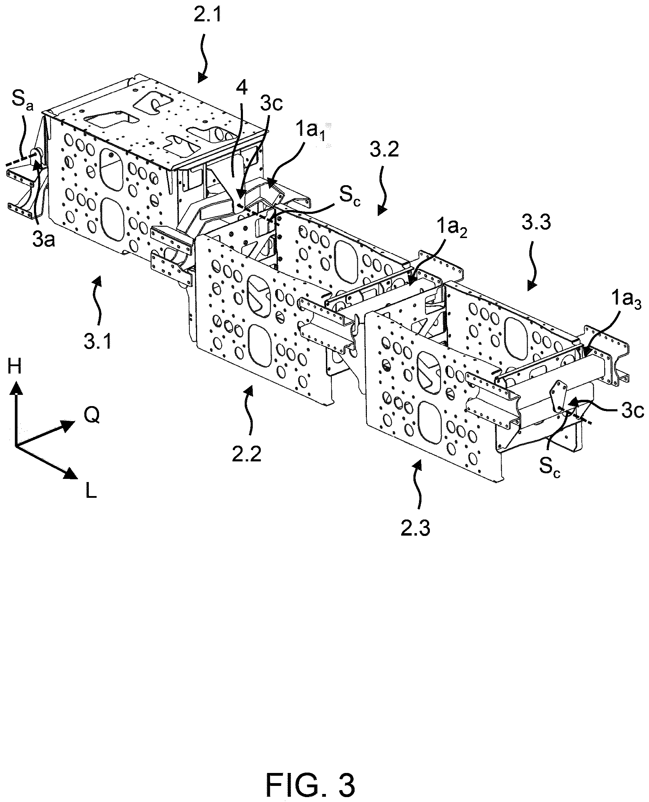

Zur besseren Darstellung der entsprechenden Lagerungen der einzelnen Batteriehalterungen 2.1, 2.2, 2.3 ist in Figur 3 eine schematische Detail-Darstellung der in Figur 2 gezeigten Anordnung ohne Längsträger 1b₁, 1b₂, dargestellt. Wie hierbei aus Figur 3 ersichtlich ist, weist dabei die Batteriehalterung 2.1 einen Blechbügel 4 auf, mittels dem sie an einem Querträger, nämlich dem Querträger 1a₁, des Trägerrahmens 1 an einer ersten Lagerstelle 3c angelenkt ist. Neben dieser Anbindung an den Trägerrahmen 1 ist die Batteriehalterung 2.1 zudem über zwei weitere Lagerstellen 3a, 3b mit den beiden Längsträgern verbunden, wobei hiervon nur eine Lagerstelle, nämlich die Lagerstelle 3a, in Figur 3 sichtbar ist.

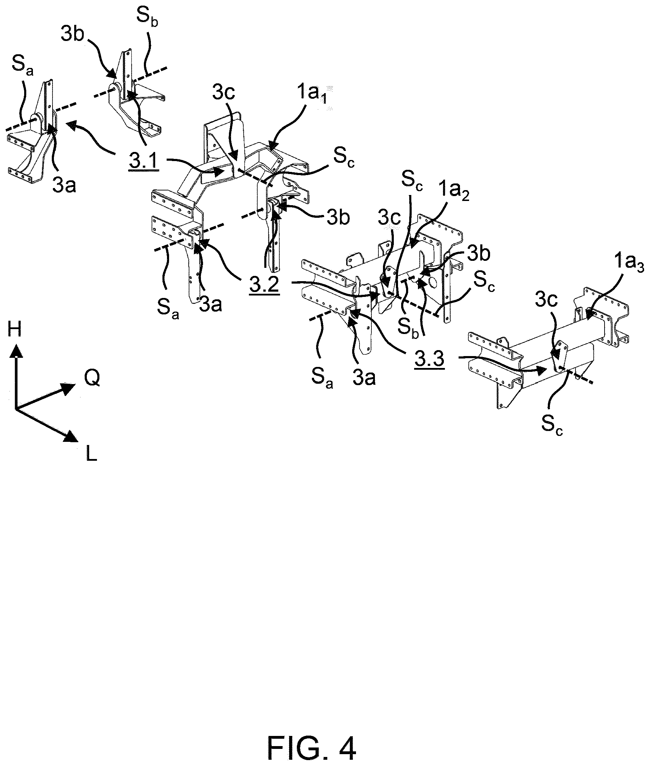

Während die Batteriehalterung 2.1 somit sowohl über einen Querträger 1a₁ als auch die beiden Längsträger 1b₁, 1b₂ im Fahrzeug 10 aufgehängt ist, zeigen die beiden Batteriehalterungen 2.2 und 2.3 eine dazu leicht abgewandelte bzw. alternative Art der Lagerung. So ist die rechts dargestellte Batteriehalterung 2.3 direkt ausschließlich mit Querträgern verbunden, ohne dass eine unmittelbare Verbindung zu den beiden Längsträgern 1b₁, 1b₂ besteht, was im Zusammenhang mit Figur 4 noch verdeutlicht werden wird. Im Detail ist die Batteriehalterung 2.3 dabei über zwei, vom Querträger 1a₂ verdeckten, Lagerstellen 3a und 3b am Querträger 1a₂ und über eine Lagerstelle 3c am Querträger 1a₃ angelenkt.

Die Batteriehalterung 2.2 ist ebenfalls an einer Lagerstelle, nämlich der Lagerstelle 3c, mit einem Querträger (Querträger 1a₂) verbunden (vgl. Figur 4). Die beiden weiteren Lagerstellen 3a und 3b befinden sich an Vorsprüngen der Längsträger 1b₁, 1b₂, wobei an den beiden Vorsprüngen zudem auch der Querträger 1a₁ befestigt ist (vgl. auch Figur 4), sodass diese Lagerung als eine Art Mischform zwischen einer reinen Längsträger- und reinen Querträgeranbindung verstanden werden kann. Bevor im Folgenden unter Bezugnahme auf Figur 4 im Detail auf die einzelnen Gelenkverbindungen der jeweiligen Lagerstellen eingegangen werden soll, sollen zuvor noch mögliche Ausführungen der Batteriehalterungen 2.1, 2.2, 2.3 selbst sowie mögliche Anordnungen der Batteriehalterungen 2.1, 2.2, 2.3 im Fahrzeug 10 genauer beschrieben werden.

So sind die einzelnen Batteriehalterungen 2.1, 2.2, 2.3 vorliegend - lediglich beispielhaft - kastenförmig ausgebildet und werden in Fahrzeuglängs- und Fahrzeugquerrichtung L, H jeweils von einem Lochblechwandungselement verschlossen. Entsprechend kann in diesem Zusammenhang auch von Batteriekäfigen gesprochen werden. Während die Batteriekäfige bzw. Batteriehalterungen 2.2 und 2.3 hierbei als vierseitg geschlossene Kästen ausgebildet sind, wird die Batteriehalterung 2.1 zusätzlich auch von einem - ebenfalls als Lochblechwandungselement ausgeführten - Deckel verschlossen. D. h., die Batteriehalterung 2.1 kann vorliegend als fünfseitig geschlossener Kasten verstanden werden. Den vorgenannten Batteriehalterungen 2.1, 2.2, 2.3 gemeinsam ist jedoch, dass alle in der vorliegenden beispielhaften Ausführungsform fahrzeugbodenseitig keine Begrenzung umfassen, d. h. mit anderen Worten, dass die Batteriehalterungen 2.1, 2.2, 2.3 fahrzeugbodenseitig offen sind. Dies ermöglicht auf vorteilhafte Weise eine gute Zugänglichkeit der Antriebsbatterien im Zuge von Wartungs- und/oder Montagearbeiten.

Weiterhin sind in der in Figur 3 exemplarisch gezeigten Ausführungsform die Batteriehalterungen 2.1, 2.2, 2.3 bezogen auf die Fahrzeughöhenrichtung H nicht alle auf derselben Höhe im Fahrzeug 10 angeordnet. So ist die Batteriehalterung 2.1 aufgrund ihrer im Vergleich zu den Batteriehalterungen 2.2 und 2.3 unterschiedlichen Anbindung an den Trägerrahmen 1 höher im Fahrzeug 10 gelagert und befindet sich oberhalb einer nicht näher dargestellten Vorderachse des Fahrzeugs 10. Demgegenüber sind die Batteriehalterungen 2.2 und 2.3 - welche sich zwischen der Vorderachse und der Hinterachse befinden - im Vergleich dazu tiefer angeordnet, sodass deren Oberkanten im Wesentlichen auf Höhe der Oberkanten der Längsträger 1b₁, 1b₂ verlaufen (vgl. Figur 2). Auf vorteilhafte Weise kann dadurch in Hinblick auf den vorgegebenen Bauraum eine möglichst große Zahl an Batteriehalterungen 2.1, 2.2, 2.3 im Fahrzeug 10 untergebracht werden.

Zur Verdeutlichung der vorstehend bereits erwähnten 3-Punkt-Lagerungen 3.1, 3.2 und 3.3 der jeweiligen Batteriehalterungen 2.1, 2.2, 2.3 ist in Figur 4 eine schematische Detail-Darstellung der jeweiligen Lagerungen der zuvor in Figur 3 gezeigten Anordnung ohne einen Teil der Batteriehalterungen 2.1, 2.2, 2.3 dargestellt. Im Fall der Aufhängung der Batteriehalterung 2.1 (links) umfassen die entsprechenden Gelenke der drei Lagerstellen 3a, 3b, 3c der 3-Punkt-Lagerung 3.1 jeweils eine Schwenkachse Sₐ, S_{b}, S_{c}, wobei die Schwenkachsen Sₐ und S_{b} der Lagerstellen 3a und 3b zueinander fluchtend in Fahrzeugquerrichtung Q und die Schwenkachse S_{c} der Lagerstelle 3c in Fahrzeuglängsrichtung L orientiert sind. Mit anderen Worten verläuft die Schwenkachse S_{c} senkrecht zu den Schwenkachsen Sₐ bzw. S_{b}. Jede der drei Lagerstellen 3a, 3b, 3c bzw. die entsprechenden Gelenke ermöglichen hierbei jeweils eine Schwenkbarkeit der Batteriehalterung 2.1 um die jeweilige Schwenkachse Sₐ, S_{b}, S_{c}. Neben diesem rotatorischen Freiheitsgrad sollen die jeweiligen Lagerstellen 3a, 3b, 3c bzw. Gelenke zur Realisierung einer Verschiebbarkeit der Batteriehalterung 2.1 entlang der jeweiligen Schwenkachse Sₐ, S_{b}, S_{c} auch einen translatorischen Freiheitsgrad aufweisen. Beispielsweise kann dies durch die Verwendung eines Gleitlagers erreicht werden, wobei die entsprechenden Gleitlager z. B. als eine, einen am Trägerrahmen befestigten Zapfen umhüllende, Gleitlagerbuchse ausgebildet sein können, welche einen Stahlrücken, der mit der Batteriehalterung 2.1 verbunden sein kann, sowie eine Gleitschicht (z. B. aus Kunststoff) umfassen kann. Auf vorteilhafte Weise kann durch die vorgenannte Ausführung der Gelenke eine möglichst hohe Bewegungsfreiheit der Batteriehalterung 2.1 bei gleichzeitiger Reduzierung der Lagerbelastungen im Rahmen der vorliegenden 3-Punkt-Lagerung 3.1 erreicht werden.

Die Aufhängungen der Batteriehalterungen 2.2 (Mitte) und 2.3 (rechts) sind hierbei analog aufgebaut, wobei sich lediglich die Position bzw. Anbindung der entsprechenden Lagerstellen 3a, 3b, 3c am Trägerrahmen 1 unterscheiden. Sowohl die Gelenke der drei Lagerstellen 3a, 3b, 3c der Batteriehalterung 2.2 als auch die Gelenke der Lagerstellen 3a, 3b, 3c der Batteriehalterung 2.3 umfassen wiederum jeweils eine Schwenkachse Sₐ, S_{b}, S_{c}, wobei auch hier jeweils die Schwenkachsen Sₐ und S_{b} der Lagerstellen 3a und 3b zueinander fluchtend in Fahrzeugquerrichtung Q und die jeweilige Schwenkachse S_{c} der Lagerstelle 3c in Fahrzeuglängsrichtung L orientiert sind, um entsprechende Nick- bzw. Wankbewegungen der Batteriehalterungen relativ zum Trägerrahmen 1 zu ermöglichen. Zur Reduzierung der Lagerbelastungen sollen auch hier die jeweiligen Lagerstellen 3a, 3b, 3c bzw. Gelenke vorzugsweise einen translatorischen Freiheitsgrad zur Realisierung einer Verschiebbarkeit der Batteriehalterungen 2.2, 2.3 entlang der jeweiligen Schwenkachse Sₐ, S_{b}, S_{c} aufweisen. D. h., bevorzugt umfassen auch die Gelenke der Batteriehalterungen 2.2 und 2.3 jeweils entsprechende Gleitlager. Entsprechend sind alle Batteriehalterungen 2.1, 2.2 und 2.3 nach demselben Grundprinzip am Trägerrahmen 1 aufgehängt und unterscheiden sich lediglich in konstruktiven Details der Ausgestaltung der Anbindung. Die Vorteile der vorgerannten Gelenkverbindungen zur Bewegungsentkoppelung der Batteriehalterungen 2.1, 2.2 und 2.3 vom Trägerrahmen 1 sind hierbei die im Wesentlichen gleichbleibenden, d. h. von Umwelteinflüssen unabhängigen, Lagereigenschaften sowie deren Haltbarkeit. Weiterhin kann im Vergleich zu elastomeren Verbindungen eine stabile mechanische Verbindung und damit eine sichere Lagerung der schweren Antriebsbatterien sichergestellt werden.

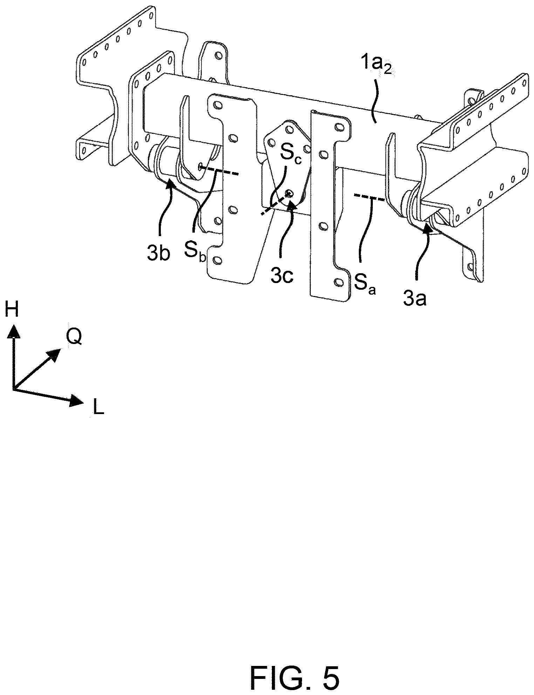

Figur 5 zeigt letztlich noch eine schematische Detail-Darstellung der Lagerungen am Querträger 1a₂. An besagtem Querträger 1a₂ ist hierbei die (nicht näher dargestellte) Batteriehalterung 2.3 über die beiden Lagerstellen 3a und 3b sowie die (nicht näher dargestellte) Batteriehalterung 2.2 über die Lagerstelle 3c angelenkt. Wie hierbei aus Figur 5 ferner ersichtlich ist, sind die entsprechenden Lagerstellen 3a, 3b, 3c vorliegend - lediglich exemplarisch - in Form von Gleitlagerbuchsen ausgeführt, die jeweils einen am Querträger 1a₂ befestigten Wellenzapfen umhüllen. An der Außenseite der Gleitlagerbuchsen, d. h. an deren Rücken, sind die jeweiligen Batteriehalterungen 2.2 bzw. 2.3 befestigt, z. B. verschweißt, wodurch insgesamt ein Verschwenken der Batteriehalterungen 2.2, 2.3 gegenüber den Wellenzapfen bzw. dem Trägerrahmen 1 um die durch den Wellenzapfen vorgegebenen Schwenkachsen Sₐ, S_{b}, S_{c} ermöglicht wird. Neben diesem rotatorischen Freiheitsgrad sollen die entsprechenden Gleitlagerbuchsen ferner bevorzugt auch zur Ermöglichung einer Verschiebbarkeit der Batteriehalterungen 2.2, 2.3 entlang der jeweiligen Schwenkachsen Sₐ, S_{b}, S_{c} ausgebildet sein. Zur Realisierung dieses weiteren translatorischen Freiheitsgrads sollen die jeweiligen Lagerstellen 3a, 3b, 3c entlang der entsprechenden Schwenkachsen Sₐ, S_{b}, S_{c}, d. h. in axialer Richtung des entsprechenden Lagers vorzugsweise ein Lagerspiel aufweisen. Auf vorteilhafte Weise kann dadurch eine möglichst hohe Bewegungsfreiheit der Batteriehalterungen 2.2, 2.3 bei gleichzeitiger Reduzierung der Lagerbelastungen im Rahmen der vorliegenden Lagerung erreicht werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung (ausschließlich durch die beigefügten Ansprüche definiert) zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Trägerrahmen
- 1a₁, 1a₂, 1a₃: Querträger
- 1b₁, 1b₂: Längsträger
- 2.1, 2.2, 2.3: Batteriehalterung
- 3.1, 3.2, 3.3: 3-Punkt-Lagerung
- 3a, 3b, 3c: Lagerstellen
- 4: Blechbügel
- 10: Fahrzeug

## Patentansprüche

1. Fahrzeug (10), vorzugsweise Nutzfahrzeug, aufweisend
a) einen Trägerrahmen (1), der zwei voneinander beabstandete und über mehrere Querträger (1a₁, 1a₂, 1a₃) miteinander verbundene Längsträger (1b₁, 1b₂) umfasst; und
b) eine Batteriehalterung (2.1; 2.2; 2.3) zur Aufnahme wenigstens einer Antriebsbatterie, wobei die Batteriehalterung (2.1; 2.2; 2.3) zwischen den Längsträgern (1b₁, 1b₂) des Trägerrahmens (1) angeordnet ist;
wobei die Batteriehalterung (2.1; 2.2; 2.3) mittels einer 3-Punkt-Lagerung (3.1; 3.2; 3.3) mit dem Trägerrahmen (1) verbunden ist, **dadurch gekennzeichnet dass** die 3-Punkt-Lagerung (3.1; 3.2; 3.3) drei Lagerstellen (3a, 3b, 3c) mit je einem Gelenk aufweist.

2. Fahrzeug (10) nach Anspruch 1, wobei jedes der besagten Gelenke eine Schwenkachse (Sₐ, S_{b}, S_{c}) umfasst, wobei zwei der Schwenkachsen (Sₐ, S_{b}) in Fahrzeugquerrichtung (Q); und eine der Schwenkachsen (S_{c}) in Fahrzeuglängsrichtung (L) orientiert sind.

3. Fahrzeug (10) nach Anspruch 2, wobei die zwei Schwenkachsen (Sₐ, S_{b}) in Fahrzeugquerrichtung (Q) fluchtend zueinander angeordnet sind.

4. Fahrzeug (10) nach einem der Ansprüche 2 oder 3, wobei jedes der besagten Gelenke jeweils
- einen rotatorischen Freiheitsgrad zur Realisierung einer Schwenkbarkeit der Batteriehalterung (2.1; 2.2; 2.3) gegenüber dem Trägerrahmen (1) um die jeweilige Schwenkachse (Sₐ, S_{b}, S_{c}) umfasst; und
- einen translatorischen Freiheitsgrad zur Realisierung einer Verschiebbarkeit der Batteriehalterung (2.1; 2.2; 2.3) gegenüber dem Trägerrahmen (1) entlang der jeweiligen Schwenkachse (Sₐ, S_{b}, S_{c}) umfasst.

5. Fahrzeug (10) nach einem der vorherigen Ansprüche, wobei jedes der besagten Gelenke
a) ein Gleitlager umfasst; und/oder
b) als zylindrisches Gelenk ausgebildet ist; und/oder
c) als Drehgelenk mit axialem Lagerspiel ausgebildet ist.

6. Fahrzeug (10) nach einem der vorherigen Ansprüche, wobei die 3-Punkt-Lagerung (3.1; 3.2; 3.3) ausgebildet ist,
- Bewegungen, vorzugsweise Nick- und/oder Wankbewegungen, der Batteriehalterung (2.1; 2.2; 2.3) relativ zum Trägerrahmen (1) zu ermöglichen und/oder
- die Batteriehalterung (2.1; 2.2; 2.3) bewegungstechnisch zumindest teilweise vom Trägerrahmen (1) zu entkoppeln.

7. Fahrzeug (10) nach einem der vorherigen Ansprüche, wobei die Batteriehalterung (2.1; 2.2; 2.3) mit zumindest einem Querträger (1a₁, 1a₂, 1a₃) verbunden ist, wobei vorzugsweise der zumindest eine Querträger (1a₁, 1a₂) als Vierkanthohlprofilträger ausgebildet ist.

8. Fahrzeug (10) nach Anspruch 7, wobei
- die Batteriehalterung (2.1; 2.2; 2.3) mit zumindest einem weiteren Querträger (1a₁, 1a₂, 1a₃) verbunden ist; oder
- die Batteriehalterung (2.1; 2.2; 2.3) mit zumindest einem Längsträger (1b₁, 1b₂) verbunden ist.

9. Fahrzeug (10), nach einem der vorherigen Ansprüche, wobei die Batteriehalterung (2.1; 2.2; 2.3)
a) als zumindest vierseitig geschlossener Kasten ausgebildet ist; und/oder
b) Lochblechwandungselemente zur Befestigung, vorzugsweise zur Verschraubung, der wenigstens einen Antriebsbatterie umfasst; und/oder
c) fahrzeugbodenseitig keine Begrenzung umfasst.

10. Fahrzeug (10), nach einem der vorherigen Ansprüche, wobei
- in der Batteriehalterung (2.1; 2.2; 2.3) zumindest zwei Antriebsbatterien aufgenommen sind und/oder neben der wenigstens einen Antriebsbatterie zumindest ein Zusatzaggregat, vorzugsweise eine elektrische Maschine, aufgenommen ist; und/oder
- die Batteriehalterung (2.1; 2.2; 2.3) achssymmetrisch zur Längsmittelachse des Fahrzeugs (10) angeordnet ist; und/oder
- die Batteriehalterung (2.1; 2.2; 2.3) einen Blechbügel (4) umfasst, aufweisend eine erste Befestigungsstelle, mittels derer der Blechbügel (4) an der Batteriehalterung (2.1; 2.2; 2.3) befestigt ist, und eine zweite Befestigungsstelle, mittels derer der Blechbügel (4) an eine der drei Lagerstellen (3a, 3b, 3c) angelenkt ist, wobei die erste Befestigungsstelle in Fahrzeughöhenrichtung (H) versetzt zur zweiten Befestigungsstelle angeordnet ist.

11. Fahrzeug (10) nach einem der vorherigen Ansprüche, wobei eine Mehrzahl, vorzugsweise drei, besagter Batteriehalterungen (2.1; 2.2; 2.3), die über die Fahrzeuglängsrichtung (L) verteilt im Fahrzeug (10) angeordnet sind, vorgesehen ist.

12. Fahrzeug (10), nach Anspruch 11, wobei
- eine Batteriehalterung (2.1) über einer Vorderachse des Fahrzeugs (10) angeordnet ist; und
- zumindest zwei Batteriehalterungen (2.2, 2.3) zwischen der Vorderachse und einer Hinterachse des Fahrzeugs (10) angeordnet sind.

13. Fahrzeug (10) nach einem der vorherigen Ansprüche, wobei die zwei Längsträger (1b₁, 1b₂) eine Mehrzahl, entlang der Fahrzeuglängsrichtung (L) verteilter, Befestigungsstellen zur wahlweisen Bereitstellung unterschiedlicher Querträgerabstände für die Anbringung unterschiedlich großer Batteriehalterungen (2.1; 2.2; 2.3) umfassen.

14. Fahrzeug (10), nach einem der vorherigen Ansprüche, wobei das Fahrzeug (10) ein, vorzugsweise elektrisch angetriebenes, Nutzfahrzeug, beispielsweise eine Sattelzugmaschine, ist.

## Claims

1. Vehicle (10), preferably a commercial vehicle, comprising
a) a support frame (1) comprising two longitudinal beams (1b₁ , 1b₂ ) spaced apart from each other and connected to each other by a plurality of cross beams (1a₁ , 1a₂, 1a₃); and
b) a battery holder (2.1; 2.2; 2.3) for receiving at least one traction battery, wherein the battery holder (2.1; 2.2; 2.3) is arranged between the longitudinal beams (1b₁ , 1b₂ ) of the carrier frame (1);
**wherein** the battery holder (2.1; 2.2; 2.3) is connected to the carrier frame (1) by means of a -3-point mounting (3.1; 3.2; 3.3), wherein the -3-point mounting (3.1; 3.2; 3.3) has three bearing points (3a, 3b, 3c) each with a joint.

2. The vehicle (10) according to claim 1, **wherein** each of said joints comprises a pivot axis (Sₐ , S_{b} , S_{c} ), wherein two of the pivot axes (Sₐ , S_{b}) are orientated in the transverse direction (Q) of the vehicle; and one of the pivot axes (S_{c} ) is orientated in the longitudinal direction (L) of the vehicle.

3. Vehicle (10) according to claim 2, **wherein** the two swivelling axles (Sₐ, S_{b}) are arranged in alignment with one another in the transverse direction (Q) of the vehicle.

4. A vehicle (10) according to any one of claims 2 or 3, **wherein** each of said joints is respectively
- a rotational degree of freedom for realising a pivotability of the battery holder (2.1; 2.2; 2.3) relative to the carrier frame (1) about the respective pivot axis (Sₐ, S_{b} , S_{c} ); and
- comprises a translational degree of freedom for realising a displaceability of the battery holder (2.1; 2.2; 2.3) relative to the carrier frame (1) along the respective pivot axis (Sₐ , S_{b} , S_{c} ).

5. A vehicle (10) according to any one of the preceding claims, **wherein** each of said joints
a) comprises a plain bearing; and/or
b) is designed as a cylindrical joint; and/or
c) is designed as a swivel joint with axial bearing play.

6. Vehicle (10) according to one of the preceding claims, **wherein** the 3-point mounting -(3.1; 3.2; 3.3) is formed,
- to enable movements, preferably pitching and/or rolling movements, of the battery holder (2.1; 2.2; 2.3) relative to the carrier frame (1) and/or
- to decouple the battery holder (2.1; 2.2; 2.3) at least partially from the carrier frame (1) in terms of movement.

7. Vehicle (10) according to one of the preceding claims, **wherein** the battery holder (2.1; 2.2; 2.3) is connected to at least one cross member (1a₁ , 1a₂, 1a₃), wherein preferably the at least one cross member (1a₁ , 1a₂) is designed as a square hollow section member.

8. Vehicle (10) according to claim 7, wherein
- the battery holder (2.1; 2.2; 2.3) is connected to at least one further cross member (1a₁ , 1a₂ , 1a₃); or
- the battery holder (2.1; 2.2; 2.3) is connected to at least one longitudinal support (1b₁ , 1b ).₂

9. Vehicle (10), according to one of the preceding claims, **wherein** the battery holder (2.1; 2.2; 2.3)
a) is designed as a box closed on at least four sides; and/or
b) comprises perforated plate wall elements for fastening, preferably for screwing, the at least one drive battery; and/or
c) does not include a limit in direction of the vehicle floor.

10. Vehicle (10), according to one of the preceding claims, **wherein**
- at least two traction batteries are accommodated in the battery holder (2.1; 2.2; 2.3) and/or at least one additional unit, preferably an electric machine, is accommodated next to the at least one traction battery; and/or
- the battery holder (2.1; 2.2; 2.3) is arranged axially symmetrically to the longitudinal centre line of the vehicle (10); and/or
- the battery holder (2.1; 2.2; 2.3) comprises a sheet metal bracket (4), having a first fastening point, by means of which the sheet metal bracket (4) is fastened to the battery holder (2.1; 2.2; 2.3), and a second fastening point, by means of which the sheet metal bracket (4) is articulated to one of the three bearing points (3a, 3b, 3c), the first fastening point being arranged offset in the vehicle height direction (H) with respect to the second fastening point.

11. Vehicle (10) according to one of the preceding claims, **wherein** a plurality, preferably three, of said battery holders (2.1; 2.2; 2.3), arranged in the vehicle (10) distributed over the longitudinal direction (L) of the vehicle is provided.

12. Vehicle (10), according to claim 11, **wherein**
- a battery holder (2.1) is arranged above a front axle of the vehicle (10); and
- at least two battery holders (2.2, 2.3) are arranged between the front axle and a rear axle of the vehicle (10).

13. Vehicle (10) according to one of the preceding claims, **wherein** the two longitudinal members (1b₁ , 1b₂ ) comprise a plurality of fastening points distributed along the longitudinal direction (L) of the vehicle for optionally providing different cross-member spacings for the attachment of battery holders (2.1; 2.2; 2.3) of different sizes.

14. Vehicle (10), according to one of the preceding claims, **wherein** the vehicle (10) is a, preferably electrically driven, commercial vehicle, for example a semi-trailer truck.

## Revendications

1. Véhicule (10), de préférence véhicule utilitaire, présentant
a) un cadre porteur (1) qui comprend deux longerons (1b₁, 1b₂) espacés l'un de l'autre et reliés l'un à l'autre par l'intermédiaire de plusieurs traverses (1a₁, 1a₂, 1a₃) ; et
b) un support de batterie (2.1 ; 2.2 ; 2.3) pour recevoir au moins une batterie d'entraînement, dans lequel le support de batterie (2.1 ; 2.2 ; 2.3) est disposé entre les longerons (1b₁, 1b₂) du cadre porteur (1) ;
dans lequel le support de batterie (2.1 ; 2.2 ; 2.3) est relié au cadre porteur (1) au moyen d'un montage à 3 points (3.1 ; 3.2 ; 3.3),
**caractérisé en ce que** le montage à trois points (3.1 ; 3.2 ; 3.3) présente trois points d'appui (3a, 3b, 3c) avec une articulation respectivement.

2. Véhicule (10) selon la revendication 1, dans lequel chacune desdites articulations comprend un axe de pivotement (Sₐ, S_{b}, S_{c}), dans lequel deux des axes de pivotement (Sₐ, S_{b}) sont orientés dans la direction transversale du véhicule (Q) ; et l'un des axes de pivotement (S_{c}) est orienté dans la direction longitudinale du véhicule (L).

3. Véhicule (10) selon la revendication 2, dans lequel les deux axes de pivotement (Sₐ, S_{b}) sont disposés en affleurement l'un par rapport à l'autre dans la direction transversale du véhicule (Q).

4. Véhicule (10) selon l'une quelconque des revendications 2 ou 3, dans lequel chacune desdites articulations comprend respectivement
- un degré de liberté en rotation pour réaliser une capacité de pivotement du support de batterie (2.1 ; 2.2 ; 2.3) par rapport au cadre porteur (1) autour de l'axe de pivotement (Sₐ, S_{b}, S_{c}) respectif ; et
- un degré de liberté en translation pour réaliser une capacité de translation du support de batterie (2.1 ; 2.2 ; 2.3) par rapport au cadre porteur (1) le long de l'axe de pivotement (Sₐ, S_{b}, S_{c}) respectif.

5. Véhicule (10) selon l'une quelconque des revendications précédentes, dans lequel chacune desdites articulation
a) comprend un palier lisse ; et/ou
b) est réalisée en tant qu'articulation cylindrique ; et/ou
c) est réalisée en tant qu'articulation tournante avec jeu de palier axial.

6. Véhicule (10) selon l'une quelconque des revendications précédentes, dans lequel le montage à 3 points (3.1 ; 3.2 ; 3.3) est réalisé pour
- permettre des mouvements, de préférence des mouvements de tangage et/ou de roulis, du support de batterie (2.1 ; 2.2 ; 2.3) par rapport au cadre porteur (1), et/ou
- découpler le support de batterie (2.1 ; 2.2 ; 2.3) en matière de mouvement au moins partiellement du cadre porteur (1).

7. Véhicule (10) selon l'une quelconque des revendications précédentes, dans lequel le support de batterie (2.1 ; 2.2 ; 2.3) est relié à au moins une traverse (1a₁, 1a₂, 1a₃), dans lequel de préférence ladite au moins une traverse (1a₁, 1a₂) est réalisée en tant que support profilé creux carré.

8. Véhicule (10) selon la revendication 7, dans lequel
- le support de batterie (2.1 ; 2.2 ; 2.3) est relié à au moins une traverse (1a₁, 1a₂, 1a₃) supplémentaire ; ou
- le support de batterie (2.1 ; 2.2 ; 2.3) est relié à au moins un longeron (1b₁, 1b₂).

9. Véhicule (10), selon l'une quelconque des revendications précédentes, dans lequel le support de batterie (2.1 ; 2.2 ; 2.3)
a) est réalisé sous forme de caisse fermée sur au moins quatre côtés ; et/ou
b) comprend des éléments de paroi en tôle perforée pour fixer, de préférence visser, ladite au moins une batterie d'entraînement ; et/ou
c) ne comprend aucune limite côté plancher de véhicule.

10. Véhicule (10), selon l'une quelconque des revendications précédentes, dans lequel
- au moins deux batteries d'entraînement sont reçues dans le support de batterie (2.1 ; 2.2 ; 2.3), et/ou au moins un agrégat auxiliaire, de préférence une machine électrique, est reçu en plus de ladite au moins une batterie d'entraînement ; et/ou
- le support de batterie (2.1 ; 2.2 ; 2.3) est disposé à symétrie axiale par rapport à l'axe médian longitudinal du véhicule (10) ; et/ou
- le support de batterie (2.1 ; 2.2 ; 2.3) comprend un étrier en tôle (4) qui présente un premier point de fixation au moyen duquel l'étrier en tôle (4) est fixé au support de batterie (2.1 ; 2.2 ; 2.3), et un deuxième point de fixation au moyen duquel l'étrier en tôle (4) est coudé au niveau d'un des trois points d'appui (3a, 3b, 3c), dans lequel le premier point de fixation est disposé de manière décalée par rapport au deuxième point de fixation dans la direction de la hauteur du véhicule (H) .

11. Véhicule (10) selon l'une quelconque des revendications précédentes, dans lequel il est prévu une pluralité, de préférence trois, desdits supports de batterie (2.1; 2.2; 2.3), qui sont disposés dans le véhicule (10) en étant répartis sur la direction longitudinale du véhicule (L).

12. Véhicule (10), selon la revendication 11, dans lequel
- un support de batterie (2.1) est disposé au-dessus d'un essieu avant du véhicule (10) ; et
- au moins deux supports de batterie (2.2, 2.3) sont disposés entre l'essieu avant et un essieu arrière du véhicule (10).

13. Véhicule (10) selon l'une quelconque des revendications précédentes, dans lequel les deux longerons (1b₁, 1b₂) comprennent une pluralité de points de fixation répartis le long de la direction longitudinale du véhicule (L) pour la fourniture sélective de différents intervalles de traverses pour la mise en place de supports de batterie (2.1 ; 2.2 ; 2.3) de différentes tailles.

14. Véhicule (10), selon l'une quelconque des revendications précédentes, dans lequel le véhicule (10) est un véhicule utilitaire, de préférence à entraînement électrique, par exemple un tracteur de semi-remorque.
